# EUROPEAN PATENT APPLICATION

(11) **EP 1 187 442 A1**
(43) Date of publication of application: **13.03.2002**
(21) Application number: 01301602.7
(22) Date of filing: 22.02.2001
(51) Int. Cl.: H04M 3/51, H04M 3/523

(54) **Selection of communications for service observing based on real-time dynamic parameters**

(30) Priority: 28.08.2000 US 649524
(71) Applicant: Avaya Technology Corp., Basking Ridge, NJ 07920 (US)
(72) Inventor: Foster, SuJeanne, Lousville, Colorado 80027 (US); Nalbone, Robert Daniel, Thornton, Colorado 80241 (US)
(74) Representative: Williams, David John

(57) **Abstract**

Selection of communications for service observing in an ACD system (103) is based on real-time dynamic parameters, i.e., on the present values of parameters whose values for the ACD system change over time. A supervisor/observer or an administrator selects (FIG. 2 or FIG. 5) one or more real-time dynamic parameters that correspond to communications whose servicing is sought to be observed. The correspondence may be either direct or indirect (e.g., correspondence to the agent (101 or 102) that services the communication). Call vectoring (111) or station prompting (112) of the ACD system then determines (302,304), from among the communications that are to be serviced at the ACD system, a communication whose corresponding one or more parameters meet the specified parameters, and connects (310) the determined communication to the service-observer's station (105) in addition to connecting the communication to the servicing agent, so that servicing of the communication by the agent may be observed by the observer. When the observed communication ends, the observer may observe the next communication that meets the selected parameters without needing to re-enter them.

## Description

### Technical Field

This invention relates generally to communications processing, and relates illustratively to automatic call distribution (ACD) systems, also variously referred to as contact centers or telemarketing systems.

### Background of the Invention

Service-observing is a feature of communications systems that enables an observer--usually a supervisor or some other management authority--to monitor the servicing of communications by servers--usually human agents. Service-observing is widely implemented on ACD systems, where it is used by call-center supervisors to monitor the servicing of calls by call-center agents.

Conventional service-observing features provide very little flexibility for defining what will be observed and when. For example, a typical service-observing feature allows the service observer to elect to observe servicing of calls routed to a particular agent or group of agents, servicing of calls routed to a particular agent station, or servicing of calls incoming to a particular directory number, but provides no further choices. In other words, the observer can request to observe a particular server of calls, but not a particular call. Some service observing features also allow the service observer to pre-select the time interval during which service-observing will be effected. And some service-observing features connect the observer to the observed call when the call is received (answered) at the ACD, while others connect the observer to the call only when the call is received (answered) by an agent.

Such limited flexibility, or even lack of flexibility, may have been adequate, or at least acceptable, in the past. Presently, however, purchasers and managers of ACDs and call centers are demanding that they be provided with the flexibility to customize and to change their systems' configurations. While manufacturers have gone to great lengths to satisfy these demands in many areas of ACD and call center operation, service-observing has not been one of them.

### Summary of the Invention

This invention is directed to solving the disadvantages and meeting the needs of the prior art. Generally according to the invention, selection of communications for service observing is based on real-time dynamic parameters, i.e., on the present values of parameters whose values for the communication service center change over time. Specifically according to the invention, a service-observing method involves specifying at least one real-time dynamic parameter corresponding to communications whose servicing is sought to be observed, determining from among communications that are to be serviced by servers a communication whose corresponding at least one real-time dynamic parameter meets the specified parameter, and connecting the determined communication to a service observing facility, other than a server, so that the servicing of the communication by the server may be observed. Illustratively, the method is effected in an arrangement, such as an ACD, that further effects connecting the communications to servers (e.g., agents) for servicing. More particularly, the specifying and determining involve specifying a value of the at least one parameter whose value changes over time in the communications service center, and determining a communication whose corresponding at least one parameter has a present value that matches the specified value. The parameter value may change over time for a particular communication or it may change over time across communications. For example, a real-time dynamic parameter may be the source (e.g., ANI) of communications. Also, a parameter corresponding to a communication need not be a parameter that is inherent to the communication itself; it may be a parameter that becomes associated with the communication by virtue of which server serves the communication. In other words, it may be a parameter of the server that serves the communication. Thus, specifying and determining may comprise specifying a real-time dynamic parameter of servers and determining a communication that is to be serviced by a server whose real-time dynamic parameter meets the specified parameter of servers.

The invention allows a service observer, or an administrator or a supervisor, to select from among a wide range of characteristics of communications whose servicing he or she desires to observe or to have observed. When the observed communication ends, the observer may preferably observe the next communication that meets the specified characteristics without needing to re-enter them. The invention thus provides great flexibility in service observing. It can improve agent training, target and detect specific problem areas in contact centers, and improve the supervisor's/observer's efficiency. It can also reduce observer staff, by only observing calls of a particular interest, and not waste time by observing calls of no interest.

While the invention has been characterized in terms of a method, it also encompasses apparatus that performs the method. The apparatus preferably includes an effector--any entity that effects the corresponding step, unlike a means--for each step. The invention further encompasses any computer-readable medium containing instructions which, when executed in a computer, cause the computer to perform the method steps.

These and other features and advantages of the present invention will become more evident from the following description of illustrative embodiments of the invention considered together with the drawing.

### Brief Description of the Drawing

FIG. 1 is a block diagram of a contact center that includes a first illustrative embodiment of the invention;
FIG. 2 is a functional block diagram of creation of parametrized communication-selection for service observing in the contact center of FIG 1;
FIG. 3 is a functional flow diagram of parametrized communication-selection for service observing in the contact center of FIG. or 4;
FIG. 4 is a block diagram of a contact center that includes a second illustrative embodiment of the invention; and
FIG. 5 is a functional block diagram of creation of parametrized communication-selection for service observing in the contact center of FIG. 4.

### Detailed Description

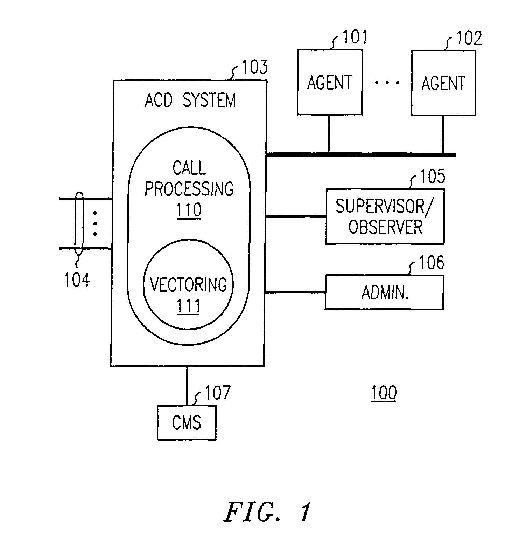

FIG. 1 shows an illustrative contact center 100 employing a first embodiment of the invention. Contact center 100 conventionally comprises a plurality of agent stations 101-102 interconnected by an ACD system 103 with communications links 104. ACD system 103 distributes communications incoming and/or outgoing on links 104 to agent stations 101-102 for processing by their associated agents. Also connected to ACD system 100 is a conventional supervisor/observer station 105 via which a contact center supervisor manages agents of workstations 101-102 and observes the service that they provide in processing communications, an administration terminal 106 via which an administrator administers contact center 100 data in ACD system 103, and a call management system 107 that stores communication records and other data on the operation and performance of contact center 100.

ACD system 103 is illustratively the Definity® enterprise communications server-based ACD of Avaya Inc. This is a stored-program-controlled system that includes a memory for storing control programs and data, and a processor for executing the programs and using the data. Conventionally included among the control programs is call processing 110, including vectoring 111. Vectoring 111 is a collection of programs that route communications within contact center 100 based upon one or more characteristics of the communication, such as the dialed telephone number (referred to as the vector directory number, or VDN). Vectoring is illustratively described in Definity® Communications System Generic 3 Call Vectoring/Expert Agent Selection (EAS) Guide, AT&T publication no. 555-230-520 (Issue 3, Nov. 1993.)

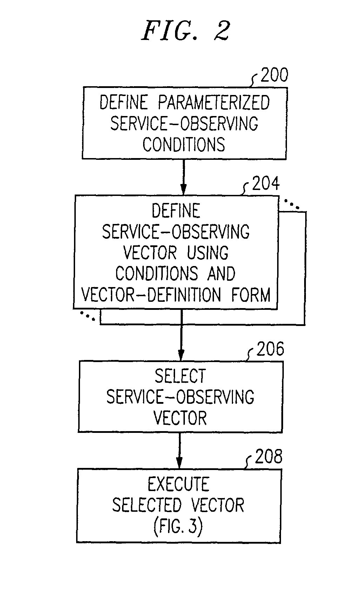

According to this embodiment of the invention, vectoring 111 is modified and expanded to effect parametrized communications-selection for service observing, whereby the supervisor/observer can specify the real-time dynamic parameters of the communications whose processing he or she wishes to observe. The requisite modification is illustrated in FIG. 2.

First, the system administrator or supervisor defines the service-observing conditions, at step 200. This activity can be done either on paper or on administration terminal 106 using conditionals and flowcharts. The service-observing conditions are the parameter values that will be used to select communications for service observing. Vectoring 111 code provides a generic function of the form "v. goto C if [condition, ...]" where [condition, ...] is the list of the conditions that a user may select to specify when the "goto" command should be executed. Step 200 involves adding the set of service-observing conditions to the [condition,...] list. The set of service-observing conditions may include any items of information stored by CMS 107, along with conventional service-observing conditions such as agent ID, agent station ID, agent split, and time of day. An illustrative set of conditions is presented in Table A.

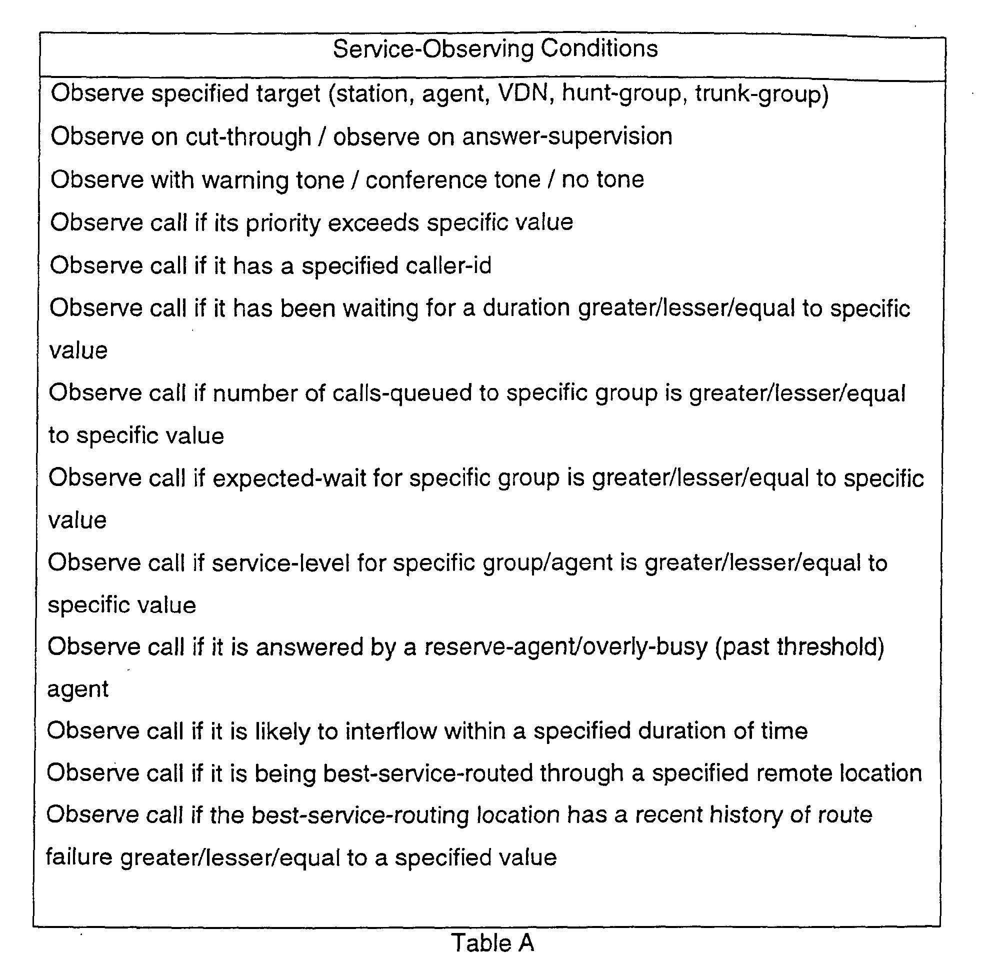

Next, the administrator at administrative terminal 106 or the contact-center supervisor at station 105 encodes the conditions into one or more service-observing vectors by using the vectoring programming language and the vector definition form that is provided by vectoring 111. The administrator or supervisor uses the defined service-observing conditions for the "v.gotoC" function to define which communications should be selected for observing. The administrator or supervisor further defines the "C" statement to which program execution is transferred upon the conditions being satisfied. This "C" statement is usually a command to bridge or conference a particular service observer's station, e.g., station 105, to the communication that is to be observed. Three illustrative vectors are presented in Tables B, C, and D.

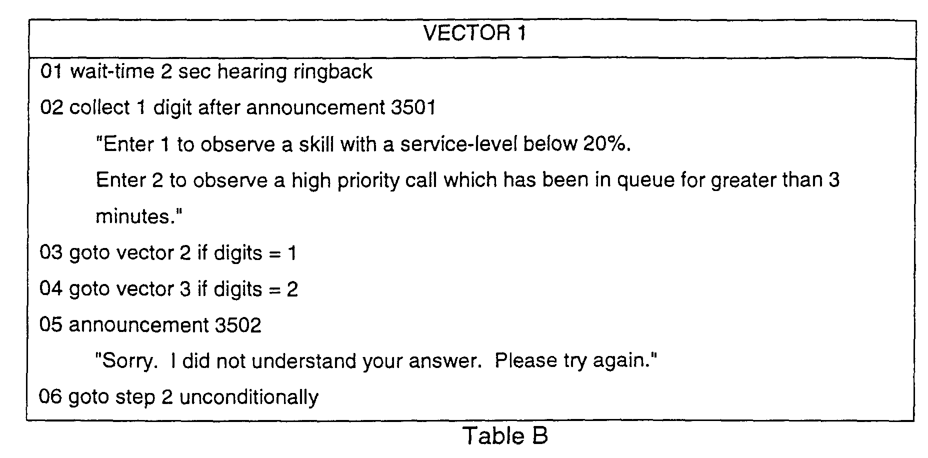

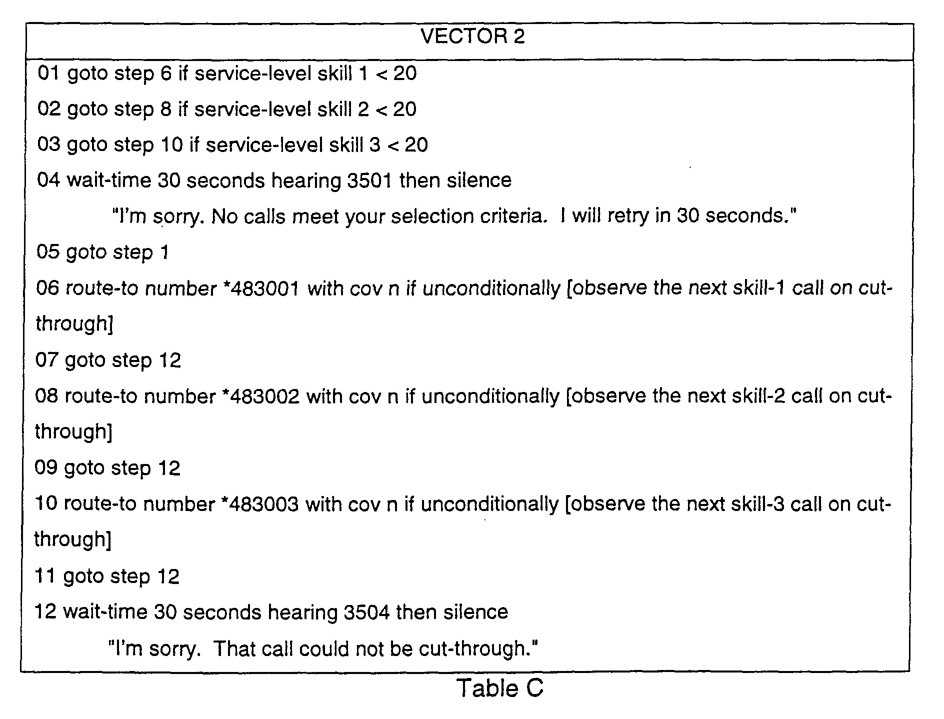

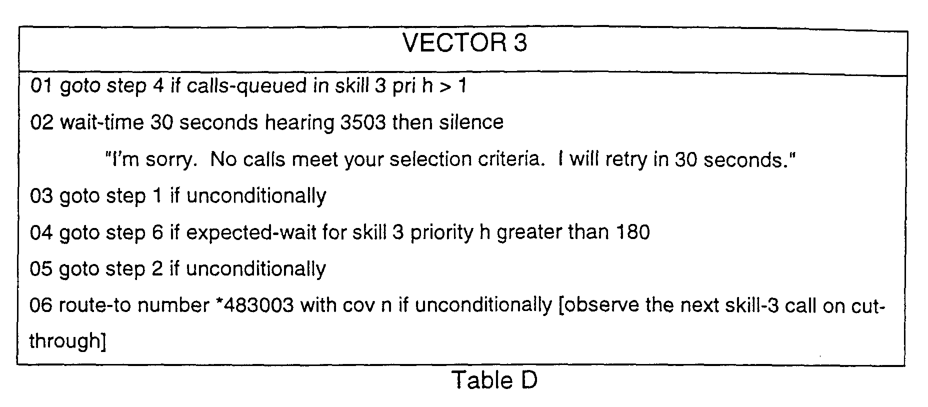

The administrator supervisor may define a plurality of different service-observing vectors at step 204. Each is usually identified by its own VDN. Therefore, to initiate service-observing, the supervisor selects one of the service-observing vectors, at step 206, and directs call processing 110 to execute that vector, at step 208, by inputting (e.g., dialing) that vector's VDN.

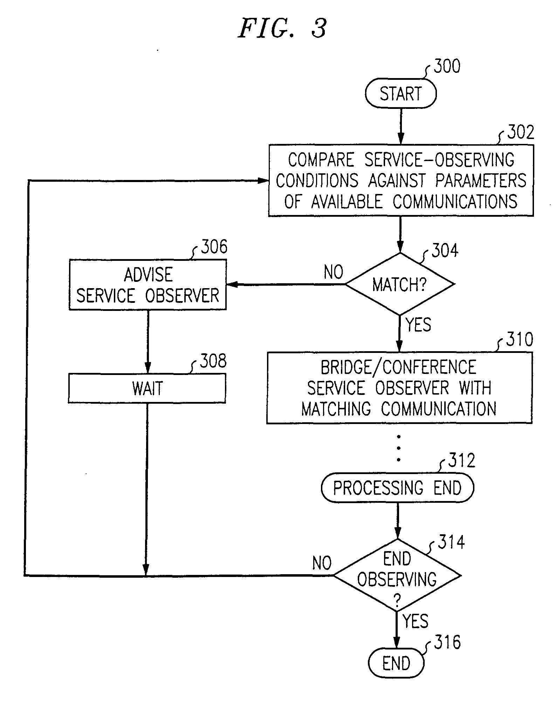

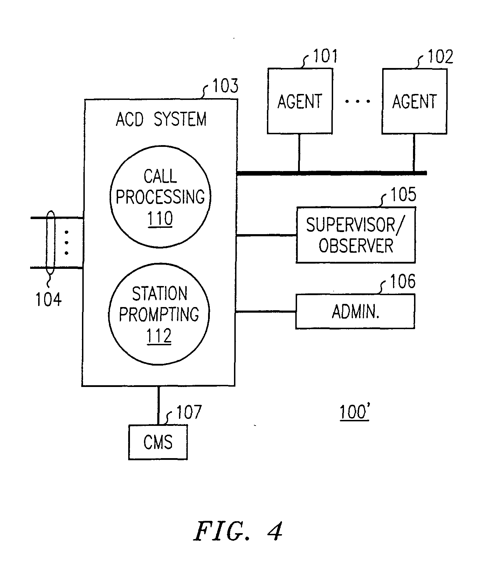

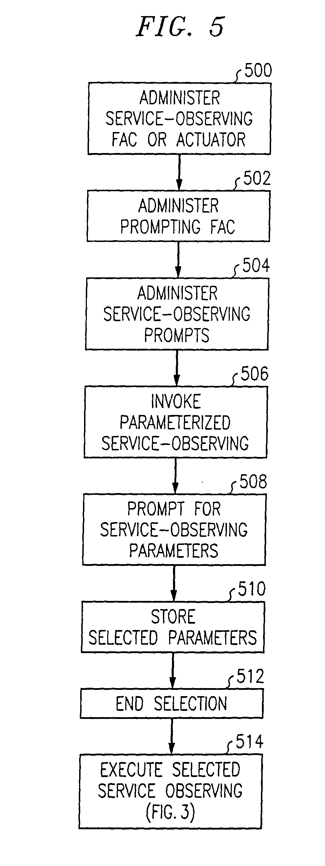

Generalized execution of service observing is illustrated in FIG. 3. Upon starting execution of service observing, at step 300, call processing 110 compares the vector's conditions against the present values of the parameters corresponding to extant communications that are waiting or presenting themselves for processing, at step 302. Illustratively, call processing 110 uses the communications' call records, agent's performance records, and other stored information for this purpose. If call processing 110 finds no full match between the service-observing conditions and any communication's corresponding parameter values, as determined at step 304, it so advises the service observer, at step 306, illustratively by playing an audio announcement to that effect at the service-observer's station, waits some period of time, at step 308, and then returns to step 302 to try again. Duration of the wait at step 308 is encoded into the service-observing vector. If call processing 110 finds a full match between the service-observing conditions and a communication's parameter values, as determined at step 304, it bridges or conferences the observer's station to the communication whose parameter values have been matched, at step 310. The vector specifies when joining should occur, e.g., immediately (on answer-supervision) or wait for agent answer, etc. When processing of the communication ends, as determined at step 312, call processing 110 optionally checks whether the service observer has signaled that service observing should be ended, at step 314. For example, call processing 110 checks whether the vector specifies a VDN Return Destination Command to indicate a return to the beginning of the service-observing vector. If the vector specifies a return, then call processing 110 returns to step 302; if not, call processing 110 ends execution of service-observing, at step 316.

FIG. 4 shows an illustrative contact center 100' employing a second embodiment of the invention. It has many of the same components as the contact center of FIG. 1, which are identified by the same numerals. The difference between the contact centers of FIG. 1 and FIG. 4 is that contact center 100' does not make use of vectoring to implement parametrized communication selection for service observing. Rather, it makes use of a station-prompting feature 112 of ACD system 107. This feature is expanded and modified as illustrated in FIG. 5.

First, if it does not already exist, the system administrator uses administration terminal 106 to define a feature access code (FAC) or an actuator (e.g., a button) of supervisor station 105 as corresponding to service-observing, at step 500. Entry of that FAC or actuation of that actuator on station 105 will trigger the service-observing feature. Next, the administrator defines an FAC for prompting, at step 501. Entry of that FAC on station 105 will trigger prompting of the supervisor for service-observing conditions. Next, the administrator defines the prompts that the supervisor is to be presented with in response to the service-observing feature and entering the prompting FAC, at step 504. These prompts logically correspond to the defining of the service-observing conditions and vector form at steps 200 and 202 of the embodiment of FIG. 2. For example, the prompts may allow the supervisor to select any of the parameters and their values that may be found in CMS 107. Alternatively, the supervisor may be presented with one or more sets of default parameters and values and asked to select among them; the supervisor may also be given the option of changing the default values of the selected set. The prompts may also enable the supervisor to select the observing station to which the observed communication is to be connected.

When the supervisor wishes to perform parameterized service observing, he or she enters the service-observing FAC or actuates the service-monitoring button and enters the prompting FAC on supervisor station 105, at step 506. In response, station prompting 112 is invoked on ACD system 107 and it prompts the supervisor (e.g., via the display of station 105) for input of service-observing conditions on station 105, at step 508, in the manner that was administered at step 502. The supervisor's inputs are stored by station prompting 112, at step 510. When the supervisor signals an end of his or her selections, at step 512, station prompting 112 calls upon call processing 110 to perform the selected service-observing, at step 514. The execution of the service-observing is the same as shown in FIG. 3.

Of course, various changes and modifications to the illustrative embodiment described above will be apparent to those skilled in the art. For example, the observed communications need not be telephone calls, but may be other types of communications, such as textual "chat"-type communications, Internet voice calls, or multimedia (e.g., audiovisual) communications. Also, the service observer need not be a real-time observer, i.e., a human observer eavesdropping on the communication. Rather, the observer may be a recording mechanism―a telephone call recorder, an Internet sniffer, etc.-- that records servicing of the communication for subsequent playback to and evaluation by a human observer. Furthermore, the service observing conditions may include REMOTE_ADDR, URL, cookies, or any other parameters of a serviced communication. Such changes and modifications can be made within the scope of the invention and without diminishing its attendant advantages. It is therefore intended that such changes and modifications be covered by the following claims except insofar as limited by the prior art.

## Claims

1. A service-observing method **CHARACTERISED BY**:
specifying (200-206; 500-512) at least one real-time dynamic parameter corresponding to communications whose servicing is sought to be monitored;
in response to the specifying, determining (302-304) from among communications that are to be serviced by servers a communication whose corresponding at least one real-time dynamic parameter meets the specified at least one parameter; and
in response to the determining, connecting (310) the determined communication to a service-observing facility (105) other than a server (101-102), for observing the servicing of the communication by the server.

2. The method of claim 1 further comprising:
connecting the communications to servers (101-102) for servicing.

3. The method of claim 1 wherein:
specifying comprises
specifying (206; 508-510) a value of the at least one parameter, whose value changes over time; and
determining comprises
determining (302) a communication whose corresponding said at least one parameter has a present value that matches the specified value.

4. The method of claim 1 further comprising:
in response to ending (312) the observing, determining (302-304) from among the communications that are to be serviced by servers another communication whose corresponding said at least one real-time dynamic parameter meets the specified at least one parameter without specifying again said at least one real-time dynamic parameter; and
in response to the determining of said another communication, connecting (310) said another communication to the service-observing facility other than a server of said another communication for observing the servicing of said another communication by the server of said another communication.

5. The method of claim 1 wherein:
specifying comprises
specifying (206; 508-510) a real-time dynamic parameter of servers; and
determining comprises
determining (302) a communication that is to be serviced by a server whose real-time dynamic parameter meets the specified parameter of servers.

6. The method of claim 5 wherein:
specifying further comprises
specifying (206; 508-510) a real-time dynamic parameter of communications; and
determining further comprises
determining (302) a communication whose real-time dynamic parameter meets the specified parameter of communications.

7. The method of claim 1 wherein:
specifying comprises
defining (204) a vector with at least one condition that represents the at least one parameter;
determining comprises
comparing (302) the at least one condition of the vector with a present value of the at least one parameter corresponding to the communications; and
connecting comprises
executing a command pointed to by the vector.

8. The method of claim 7 wherein:
defining comprises
populating (204) a vector definition form with the at least one condition; and
executing comprises
executing (208) a goto command of the vector.

9. The method of claim 1 wherein:
specifying comprises
prompting (508) for input of the at least one parameter; and
determining comprises
in response to one of entry of a feature access code and actuation of an actuator, causing (514) call processing (110) to determine the communication.

10. An apparatus (100; 100') **CHARACTERISED IN THAT** it performs the method of any of the claims 1-9.
